# EUROPEAN PATENT APPLICATION

(11) **EP 2 515 511 A1**
(43) Date of publication of application: **24.10.2012**
(21) Application number: 11169863.5
(22) Date of filing: 14.06.2011
(51) Int. Cl.: H04M 1/2745, H04M 1/725, H04L 29/08, G06F 9/50

(54) **Method and devices for sharing application data**

(30) Priority: 18.04.2011 US 66634
(71) Applicant: Mitel Networks Corporation, Ottawa, ON K2K 2W7 (CA)
(72) Inventor: Soundrapandian, Suriyaprakash, Chandler, AZ Arizona 85286 (US); Midtun, James Dean, Chandler, AZ Arizona 85249 (US)
(74) Representative: Venner Shipley LLP

(57) **Abstract**

Generally described, the present disclosure relates to an electronic device having limited memory. More specifically, the disclosure relates to intelligent data sharing for advanced features on mobile platforms. In one illustrative embodiment, a mobile device provides a platform having native services that use shared data. The data can be received from a central server. In turn, the data can be separated on the mobile device into categories. For a number of contacts, these categories can include, but are not limited to, usage, total count, grouping, location and organization. After the data is placed within the categories, the data can be shared between the services for applications. These applications can include, but are not limited to, voice dialling, Bluetooth™ dialling, searching and dialling. The data can be prioritized depending on the categories. Through prioritization, data can be removed when memory is low and new data is received.

## Description

This disclosure generally relates to data sharing, and more particularly, although not exclusively, to sharing data among native services provided by mobile platforms whereby the data is filtered and prioritized into configurable categories that limit the amount of data for sharing.

Mobile platforms control data provided to application programs that run on mobile devices such as mobile phones, smartphones, personal digital assistants, handheld computers and the like. As in many of these devices, the mobile platforms provide services to applications running on them. It is desirable or often necessary for applications to share data between these services. As the amount or size of data becomes unreasonably large, however, current solutions fail or become overly restrictive in functionality.

For example, when a mobile application retrieves a large number of contacts from a central server for use within the local application, several issues arise. For the mobile application to provide applications such as voice dialling, Bluetooth™ dialling, native search, and native dialling, it is necessary to share this data with the services for the applications on the device. As the number of contacts increases, the solution fails or becomes unbearably slow due to the limited memory and processing capabilities of the mobile device.

To overcome these challenges, some applications prevent sharing of data on mobile platforms. Preventing the sharing of data, however, results in inefficiencies and ultimately does not reduce the amount of processing required by the mobile device. Manual creation or copying of desired data objects or implementing a strict size limitation on sharing with no dynamic or automatic modification can also be used. Nevertheless, these methods present a number of different challenges.

A system and method is therefore needed whereby data is shared with local services. At the same time, minimum resource usage should be provided and setup so that removal of the shared data is prioritized. These, as well as other related advantages and features, are described in the present disclosure.

The novel features believed to be characteristic of the application are set forth in the appended claims. In the descriptions that follow, like parts are marked throughout the specification and drawings with the same numerals, respectively. The drawing figures are not necessarily drawn to scale and certain figures can be shown in exaggerated or generalized form in the interest of clarity and conciseness. The application itself, however, as well as a preferred mode of use, further objectives and advantages thereof, will be best understood by reference to the following detailed description of illustrative embodiments when read in conjunction with the accompanying drawings, wherein:
Figure 1 depicts illustrative hardware and software components of a typical mobile device for sharing data between services in accordance with one aspect of the present disclosure;
Figure 2 shows an exemplary environment for the mobile device to receive and process data in accordance with one aspect of the present disclosure;
Figure 3 provides a flow chart showing illustrative procedures for sharing data between native services in accordance with one aspect of the present disclosure;
Figure 4 is a flow chart showing illustrative procedures for processing incoming data in accordance with one aspect of the present disclosure;
Figure 5 shows a flow chart having illustrative procedures for prioritizing the incoming data in accordance with one aspect of the present disclosure; and
Figure 6 illustrates an exemplary environment for establishing a dataset for native services in accordance with one aspect of the present disclosure.

The description set forth below in connection with the appended drawings is intended as a description of presently preferred embodiments of the application and is not intended to represent the only forms in which the present application can be constructed and/or utilized. The description sets forth the functions and the sequence of steps for constructing and operating the application in connection with the illustrated embodiments. It is to be understood, however, that the same or equivalent functions and sequences can be accomplished by different embodiments that are also intended to be encompassed within the scope of this application.

Generally described, the present disclosure relates to electronic devices. More specifically, this disclosure relates to intelligent data sharing for advanced features on mobile platforms. In one illustrative embodiment, a mobile device provides a platform having native services using shared data. The data can be received from a central server. In turn, the data can be separated into categories. For a number of contacts, these categories can include, but are not limited to, usage, total count, grouping, location and organization. After the data is placed within the categories, the data can be shared between the services for applications. The data can also be prioritized within the categories. Through prioritization, data can be removed when memory is low and new data is received.

Numerous advantages can be provided by the illustrative embodiment described above. Large amounts of data can be shared among native services provided on mobile platforms. Automatic sharing allows for minimum resource usage. In addition, data can be appropriately filtered using configurable categories as to limit the amount of data necessary for sharing. Dynamically adjusting the data that is shared allows for automatic cleanup. Many additional advantages of the present disclosure will become apparent to those skilled in the relevant art as provided for in the following description.

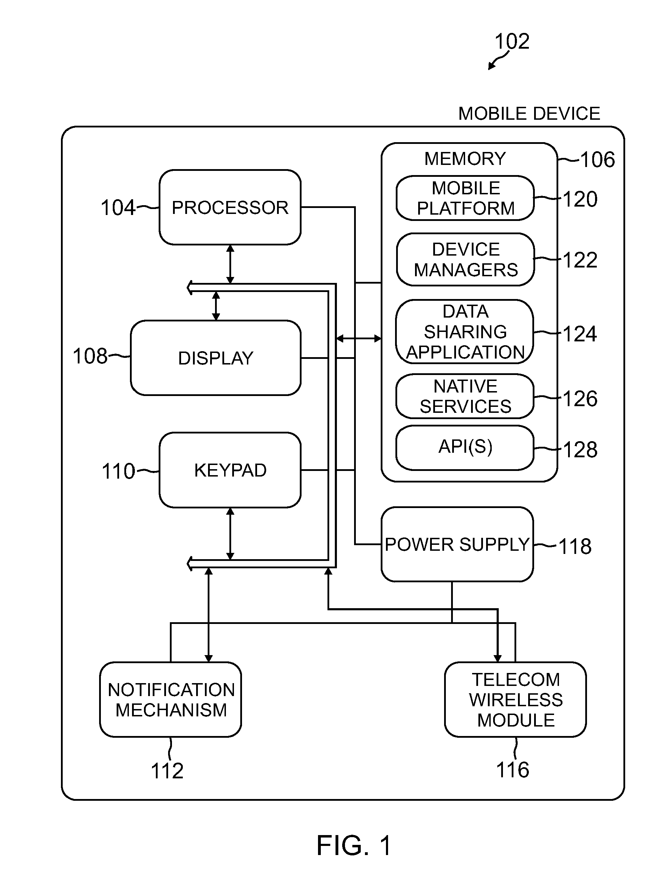

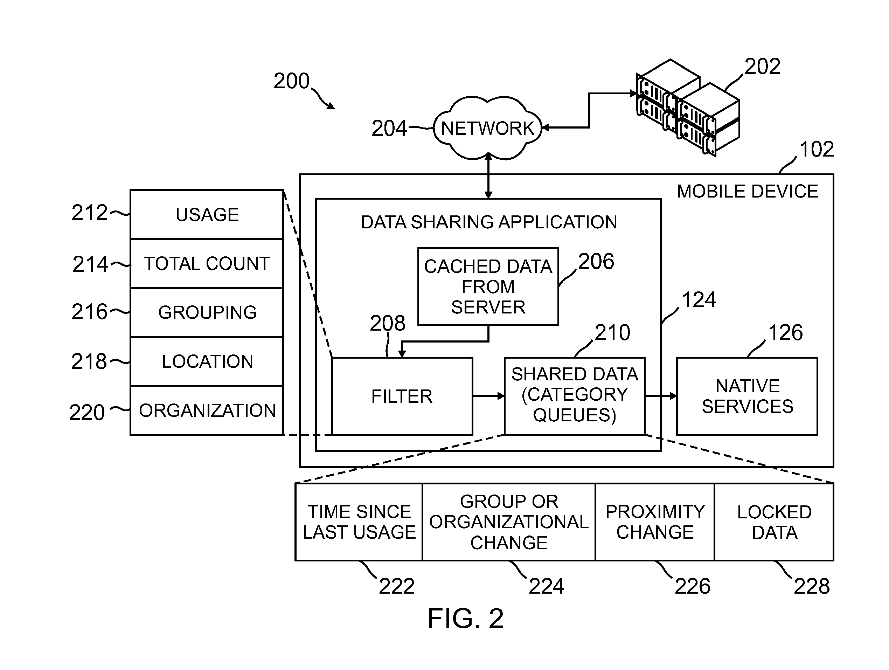

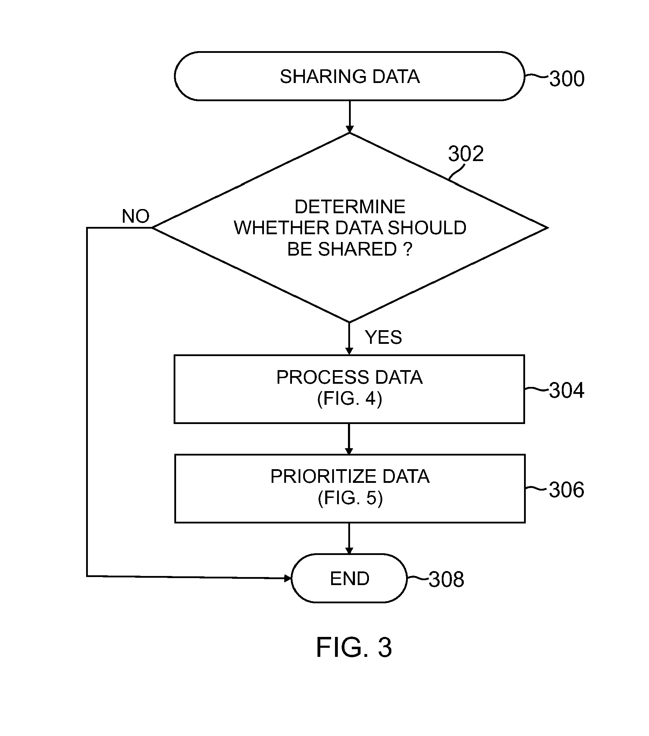

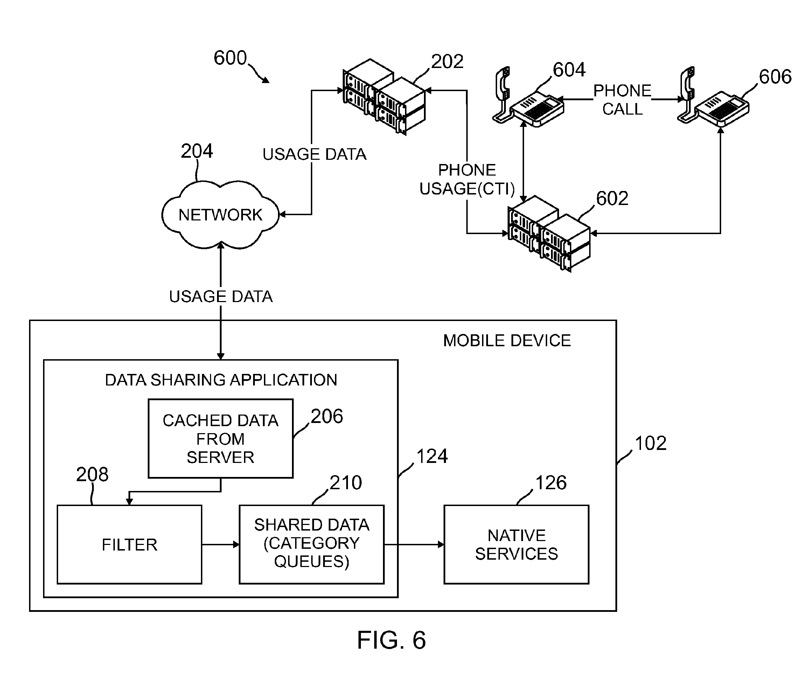

Before describing embodiments of the present disclosure, an exemplary mobile device sharing data between native services will be described in Figure 1 and an operating environment for the mobile device is provided in Figure 2. Thereafter, FigureS 3 through 5 provide flow charts that describe illustrative processes for sharing data. Figure 6 depicts an exemplary scenario in which data is shared.

Turning now to Figure 1, illustrative hardware and software components of a typical mobile device 102 for sharing data between services 126 in accordance with one aspect of the present disclosure are provided. While represented as working with only mobile devices 102, those skilled in the relevant art will appreciate that other types of devices can be used. For example, sharing data can be used by non-mobile systems having limited resources.

The mobile device 102 can have a processor 104 for implementing logic, a memory 106, a display 108 and a keypad 110. The display 108 of the mobile device 102 can be a liquid crystal display (LCD), or any other type of display commonly used in mobile devices 102. The display 108 can be touch-sensitive, and can act as an input device. The keypad 110 can be a push button numeric dialling pad such as on a typical telephone, a multi-key keyboard such as a conventional keyboard, or any other device for inputting textual data.

The memory 106 generally includes both volatile memory such as RAM and non-volatile memory such as ROM, flash memory, or the like. The non-volatile portion of the memory 106 can be used to store persistent information which should not be lost when the mobile device 102 is powered down. The mobile device 102 can include a mobile platform 120. The mobile platform 120 can reside in the memory 106 and be executed on the processor 104.

The memory 106 can also include one or more device managers 122 for interacting with one or more input/output (I/O) devices. The device managers 122 can be software installed on the mobile device 102. A device manager 122 can correspond to each I/O device. In addition to the device manager 122, one or more application programs can be loaded into memory 106 and run on or in association with the mobile platform 120. These applications can use and store information in the memory 106, such as e-mail or other messages used by an e-mail application, contact information used by a PIM, appointment information used by a scheduling program, documents used by a word processing program, instant messaging information used by an instant messaging program and the like.

Also within the memory 106, a data sharing application 124 can be run on the mobile device 102, which is, in part, the subject of the present disclosure. The application 124 can be used to process and prioritize incoming data. The application 124 can be installed on the mobile device 102 through a network connection or via a direct link. The application 124 can be preinstalled and can be part of the mobile platform 120 or other application. The memory 106 can also include native services 126. Native services 126 are typically provided by the mobile platform 120. Native services 126 can run without any external support. As will be shown below, the data sharing application 124 can be used with the native services 126.

The mobile platform 120 and the data sharing application 124 can be used to appropriately filter the large amounts of data. The application 124 can separate the data automatically using configurable categories to limit the amount of data necessary for sharing between the native services 126. The application 124 can dynamically adjust the data so that the data can be removed when no longer needed.

A collection of one or more APIs 128 are provided for facilitating wireless communications between the mobile device 102 and one or more remote I/O devices. The APIs 128 can be invoked by the applications to recognize and control the one or more remote I/O devices. In this manner, the mobile device 102 is able to take advantage of services or functionalities of the one or more remote I/O devices. The mobile device 102 can also include a power supply 118, which can be implemented as one or more batteries, fuel cells, or other sources of electrical power. The power supply 118 might further include an external power source, such as an AC adapter or a powered docking cradle that supplements or recharges the batteries.

The mobile device 102 can also include one or more audio, visual, and/or vibratory notification mechanisms 112. These notification mechanisms 112 can be directly coupled to the power supply 118 so that when activated, they remain on for a duration dictated by the notification mechanism 112 even though the processor 104 and other components might shut down to conserve energy. Examples of notification mechanisms 112 can include one or more LEDs, an audio interface, and a vibration generator. The mobile device 102 can also include a wireless module 116 that facilitates wireless connectivity between the mobile device 102 and the outside world via the communications network.

Figure 2 shows an exemplary environment 200 for the mobile device 102 to receive and process data in accordance with one aspect of the present disclosure. The mobile device 102 can communicate with an application server 202 wirelessly or through a direct connection. The application server 202 can include one or more computing systems and is not limited to a single entity as shown. Typically, the application server 202 can have a processing unit, system memory, and system bus that operatively couples various system components. A hard disk drive, magnetic disk drive, optical disk drive and their associated computer-readable medium can provide nonvolatile storage of computer-readable instructions and data structures for the application server 202.

Data can be provided through a network 204 from the application server 202 to the data sharing application 124 running on top of the mobile device 102. The application server 202 can be logically connected to the network 204. The network 204 can include a local area network, wide area network, personal area network, campus area network, metropolitan area network, or global area network. The data can be received by the data sharing application 124 through a direct connection or wirelessly.

The data sharing application 124, in some embodiments, can be used to share contacts between native services 126. The application server 202 can provide the application 124 with a large number of contacts for use within a local application. Providing all contacts downloaded from the server 202, however, is not always viable as the contact count or information per contact becomes large. The data sharing application 124 can process and prioritize these contacts between the native services 126 on the device 102 to reduce memory 106 and processor 104 usage.

The application 124 can receive data from the application server 202 at 206. In some embodiments, the data can be cached. At 208, the data can be filtered whereby the data can be processed or separated into different categories. Typically, only necessary data elements to the native services 126 are filtered into categories. For a large number of contacts, the categories for filtering the data can be, but are not limited to, usage 212, total count 214, grouping 216, location 218 and organization 220.

When data is filtered into a usage category 212, the data is processed based on the utilization of the data. For example, a contact for one party can be used more frequently than other contacts on the user's applications. In some embodiments, the usage can depend on how many times the user calls, texts, emails or views data for the party. The more the data is used, often the more likely it will be captured by the filter and shared between the native services 126.

In some embodiments, a total count category 214 can be used to process the data. This category 214 can filter the data based on the total number of data elements and whether it would be viable to include the elements until the number exceeds a configured restriction. When this restriction is met, other criteria can be considered. When a grouping category 216 is used, the data can be processed based on known groups for the contacts. This can include an active directory type grouping or some other central server information. This filter would consider data members related to the user's group or related groups.

The data can also be separated into a location category 218. This filter can be based on the user's location. Continuing with the illustration above, contacts determined to be in the user's proximity can be included in the shared data. In some embodiments, the data can be filtered into an organization category 220. In this category 220, the filter can determine whether the data should be shared based on organizational data such as a company database. This data can include such items as company organizations charts.

While several categories 212, 214, 216, 218 and 220 were shown above, those skilled in the relevant art will appreciate that other categories can be used and be implemented beyond the illustration described above. The data can also be sorted by combining categories 212, 214, 216, 218 and 220, instead of using a single category. For example, a usage category 212 can be combined with a location category 218 to determine whether the data should be shared.

Continuing with Figure 2, the data can be shared at 210. Each of these categories 212, 214, 216, 218 and 220 can then be used within a configurable queue such that specific portions of the available memory 106 of the mobile device 102 can be devoted to the different categories. As data elements are selected to become shared elements, and between the categories 212, 214, 216, 218 and 220, they can also be associated with exit criteria 222, 224, 226 and 228. The exit criteria can include time since last usage 222, group or organizational change 224, proximity change 226 and locked data 228.

In some embodiments, the time since last usage 222 can be associated with the data provided in the usage category 212. Exit criteria corresponding to group or organizational change 224 can also be associated with the grouping category 216 and organization category 220. Proximity change 226 can be associated with the location category 218. In some embodiments, the data can be associated with locked data 228.

After the data is processed and prioritized, the data can be provided to the native services 126. The exit criteria 222, 224, 226 and 228 relate to categories 212, 214, 216, 218 and 220. Those skilled in the relevant art, however, will appreciate that there are a number of different categories that exist with various exit criteria and are not limited to those described above.

By categorization of the criteria and implementing separate queues, the data sharing application 124 can allow for the prioritization of cleanup. For example, when the application 124 reaches a memory threshold and a new shared element is received, a decision can be made as to what data to remove. This prioritization can be defined or user configurable. In some embodiments, a user can choose to make sure that commonly used contacts remain shared as long as possible while group members who are rarely accessed are removed when space is needed.

Generally, there are two types of situations that can cause shared data elements to be removed from the shared data queues. In some embodiments, the user can establish a configured expiration for the shared data. This can denote different things based on the category 212, 214, 216, 218 and 220. For the location category 218, a data element can expire as it moves out of proximity. Whereas a usage category 212 data element can expire after a specified amount of time passes since its last use. The system can be configured to immediately remove expired data upon expiration or can remove expired data when memory 106 is needed. An organization category 220 data element can expire when the organization changes.

In some embodiments, the data can also be removed by force. The data sharing application 124 can determine the element that should be removed. The application 124 can remove a data element from the queue in different ways based on the category 212, 214, 216, 218 and 220. For example, a location data element can be removed when it is farthest from proximity whereas a usage element can be removed when the data has not been used for a long period of time.

Figures 3 through 5 provide flow charts showing exemplary procedures for processing and prioritizing incoming data from the application server 202. The technology described therein can be implemented as logical operations and/or modules in the mobile device 102. The logical operations can be implemented as a sequence of processor-implemented steps executing in one or more computer systems and as interconnected machine or circuit modules within one or more computer systems. Likewise, the descriptions of various component modules can be provided in terms of operations executed or effected by the modules. The resulting implementation is a matter of choice, dependent on the performance requirements of the underlying environment 200 in which the described disclosure is implemented. The logical operations making up the embodiment of the disclosure described herein are referred to variously as operations, steps, objects, or modules.

It should be understood that logical operations can be performed in any order, unless explicitly claimed otherwise or a specific order is inherently necessitated by the claim language. The mobile device 102 described herein can allow for the determination and allocation of available memory 106 for shared data based on a device or external memory. This allocation can be defined by the application server 202, data sharing application 124 or user.

Referring now to Figure 3, a flow chart showing illustrative procedures for sharing data between native services 126 in accordance with one aspect of the present disclosure is provided. The processes for sharing data can begin at block 300. At decision block 302, the data sharing application 124 on the mobile device 102 can determine whether the data received from the application server 202 should be shared. When the data is not to be shared, the processes can end at block 308. In some embodiments, and if the amount of data received does not slow down the services 126 running on the mobile device 102, the user can setup their mobile device 102 to not share the data.

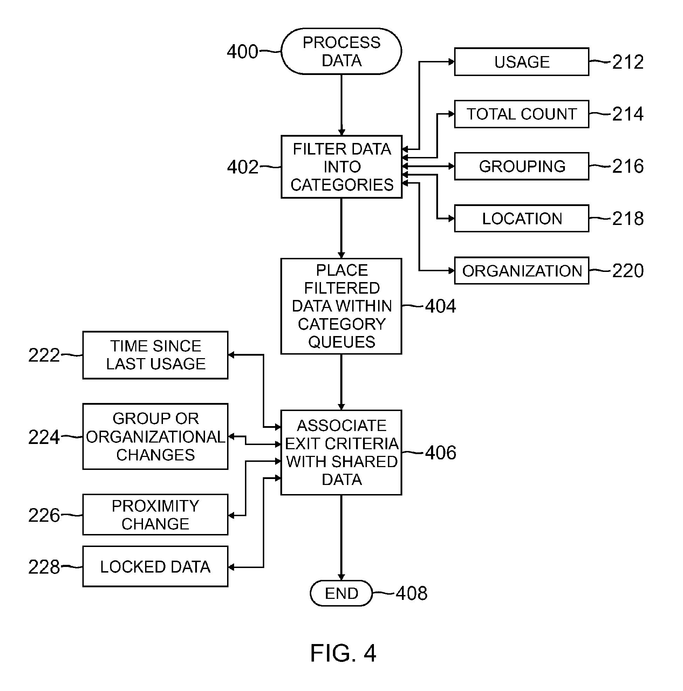

At block 304, and when the data is to be shared, the data can be processed. This determination typically occurs automatically, generally when the mobile device 102 is being bombarded with data and the services thereon are slowing down. Figure 4 is a flow chart showing illustrative procedures for processing incoming data in accordance with one aspect of the present disclosure. The procedures for processing the incoming data can begin at block 400.

At block 402, the data can be filtered into categories. For contacts, these categories can include usage 212, total count 214, grouping 216, location 218 and organization 220, which were described above. The data can be provided in configurable queues for each category at block 404. The category queues can be made for each category that the data was filtered in. This can allow the data to be separated from other data and be used for specific purposes. The data can be separated into configurable categories for sharing on a private branch exchange or the like and provided to the mobile device 102. Alternatively, and as shown, the data can be separated on the mobile device 102 itself.

The data can be associated with exit criteria at block 406. The criteria can include time since last usage 222, group or organizational changes 224, proximity change 226 and locked data 228 for the contacts. The criteria 222, 224, 226 and 228 can be associated with the data before being placed into the queues or afterwards. The processes can end at block 408.

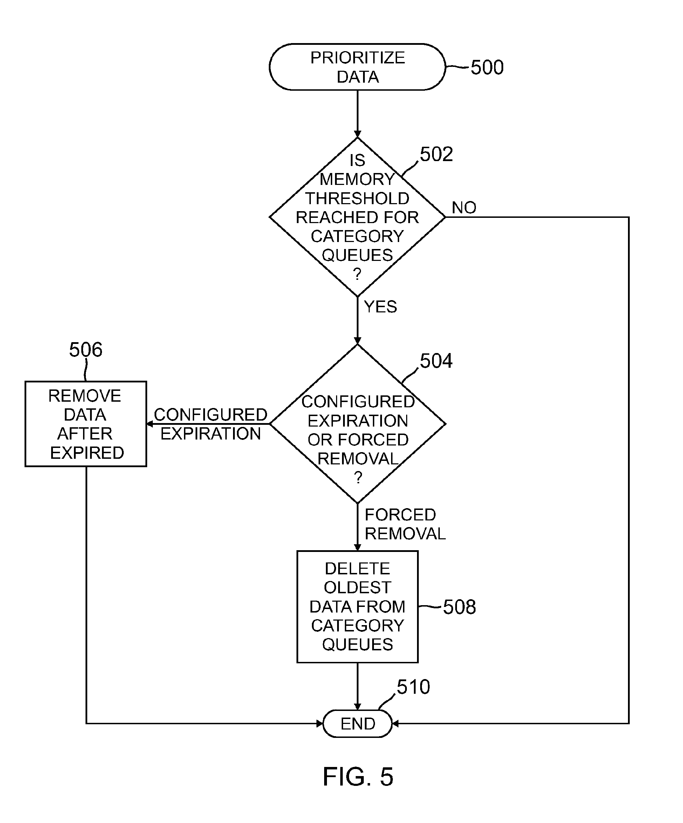

Returning to Figure 3, after the data is processed, the data can be prioritized at block 306. Figure 5 shows a flow chart having illustrative procedures for prioritizing the incoming data in accordance with one aspect of the present disclosure. The processes can begin at block 500. At decision block 502, the data sharing application 124 can determine whether the memory 106 has reached its threshold for the category queues. When the threshold has not been reached, in some embodiments, the processes can end at block 510.

When the memory 106 has reached its threshold, at decision block 504, the data sharing application 124 can determine how to remove data to free up memory 106. When the data is configured to expire, the data can be removed at block 506. For the categories 212, 214, 216, 218 and 220 described above, the configured expiration is determined by the exit criteria 222, 224, 226 and 228. The processes can end at block 510.

At block 508, and when the data is forced to be removed, the data sharing application 124 can delete the oldest data from the category queues. Dynamic memory allocation can be used such that the removal of data from one queue can create space in another queue. Those skilled in the relevant art will appreciate that the memory 106 can be shared between the queues. The processes can end at block 510.

Returning to Figure 3, the processes can end at block 308. Referring now to Figure 6, an exemplary environment 600 for establishing a dataset for native services 126 in accordance with one aspect of the present disclosure is provided. The data sharing application 124 on the mobile device 102 can maintain a large set of contact data from an off node system, for example, data provided by thousands of users. However, the majority of this data is useless to the native services 126 on the devices 102. For example, an address book, calendar or dialler application can use only a certain amount of data coming in from the application server 202. The data sharing application 124, however, would be extremely useful to provide a very small subset of the contacts imported and available for the native services 126. Information regarding usage or relationships internal to the mobile device 102 as well as external, but within the overall system, can then be gathered and processed by the data sharing application 124 in order to select the small subset of data to be shared by the native services 126.

Figure 6 shows a private branch exchange 602 or off node system for facilitating a phone call placed between a first phone 604 and a second phone 606. While this interaction is not present on the mobile device 102 itself, the call can be conveyed to the application 124 via the application server 202 to establish a relationship between the first phone 604 and the second phone 606. In some embodiments, the application server 202 can be a unified communications server. The usage data can then be provided to the mobile device 102 through the network 204. This data can be processed and prioritized to enhance the native services 126 by the mobile device 102.

Those skilled in the relevant art will appreciate that the external relationships provided to the mobile device 102 can be other types of interactions, for example, emails, instant messages, proximity, etc. These external relationships can be provided to the mobile device 102 in order to establish relationships to help define the necessary dataset for the native services 126.

The foregoing description is provided to enable any person skilled in the relevant art to practice the various embodiments described herein. Various modifications to these embodiments will be readily apparent to those skilled in the relevant art, and generic principles defined herein can be applied to other embodiments. Thus, the claims are not intended to be limited to the embodiments shown and described herein, but are to be accorded the full scope consistent with the language of the claims, wherein reference to an element in the singular is not intended to mean "one and only one" unless specifically stated, but rather "one or more." All structural and functional equivalents to the elements of the various embodiments described throughout this disclosure that are known or later come to be known to those of ordinary skill in the relevant art are intended to be encompassed by the claims. Moreover, nothing disclosed herein is intended to be dedicated to the public regardless of whether such disclosure is explicitly recited in the claims.

## Claims

1. A mobile device configured to:
receive data from an off node system;
filter said data into at least one category;
associate said data with exit criteria;
share said data from said at least one category with services provided to applications; and
remove said data depending on said exit criteria.

2. The mobile device of claim 1, wherein removing said data depending on said exit criteria comprises determining whether memory on said mobile device reaches a threshold and new data is received.

3. The mobile device of claim 1 or claim 2, wherein said data received from said off node system comprises statistics collected between interactions outside of said mobile device and optionally wherein said interactions are between a first phone and a second phone.

4. A method for providing services to applications comprising:
receiving data;
filtering said data to at least one category;
associating said data with exit criteria;
sharing said data from said at least one category between services; and
removing said data depending on said exit criteria.

5. The method of claim 4, wherein receiving said data comprises obtaining said data from an application server.

6. The method of claim 4 or claim 5, wherein filtering said data to said at least one category comprises selecting said data required by said services.

7. The method of any of claims 4 to 6, wherein filtering said data to said at least one category comprises placing said data into a configurable criteria queue for each category.

8. The method of any of claims 4 to 7, wherein filtering said data to said at least one category comprises processing said data based on at least one of usage, total count, known group, location and organization.

9. The method of any of claims 4 to 8, wherein associating said data with said exit criteria comprises configuring said data to expire based on at least one of last usage, group or organizational change and proximity change.

10. The method of any of claims 4 to 9, wherein associating said data with said exit criteria comprises configuring said data to be locked.

11. The method of any of claims 4 to 10, wherein removing said data depending on said exit criteria comprises configuring an expiration for said data or forcing removal of said data.

12. The method of any of claims 4 to 11, wherein removing said data depending on said exit criteria comprises determining whether a memory threshold has been reached.

13. A device configured to:
receive data from an application server;
separate said data into configurable categories;
prioritize said data for removal; and
share said data between services.

14. The system of claim 13, wherein said device has limited memory and/or wherein said services comprise at least one of searching and dialling and/or wherein the device is further configured to share said data on a private branch exchange.

15. The system of claims 13 or 14, wherein the device is further configured to place said data separated into said configurable categories into separate queues for each category and/or wherein said data is separated into at least one of usage, total count, grouping, location and organization categories and/or wherein prioritizing said data for removal comprises associating said data with exit criteria based on said configurable categories.

## Amended claims

### Amended claims in accordance with Rule 137(2) EPC.

**1.** A mobile device configured to:
receive data;
filter a portion of the received data to be made available for sharing, according to at least one parameter of the data, associated with at least one respective category (212, 214, 216, 218, 220);
associate said filtered data with criteria (222, 224, 226, 228) for removing the data from the mobile device, a criterion based on a parameter of the data corresponding to a respective filtering category;
share said data from said at least one category with services (126) provided to applications; and
remove said data depending on said removal criteria.

**2.** The mobile device of claim 1, wherein removing said data depending on said removal criteria comprises determining whether memory on said mobile device reaches a threshold and new data is received.

**3.** The mobile device of claim 1 or claim 2, wherein said received data comprises information relating to interactions performed outside of said mobile device and optionally wherein said interactions are between a first phone and a second phone.

**4.** The mobile device according to any one of claims 1 to 3 wherein said mobile device has limited memory.

**5.** The mobile device according to any one of the previous claims wherein said services comprise at least one of searching and dialling.

**6.** The mobile device according to any one of the previous claims, wherein the mobile device is further configured to place said data separated into said configurable categories into separate queues for each category.

**7.** A method for providing services to applications comprising:
receiving data;
filtering a portion of the received data to be made available for sharing, based on at least one parameter of the data corresponding to at least one respective category (212, 214, 216, 218, 220);
associating said filtered data with criteria (222, 224, 226, 228) for removing the data, a criterion based on a parameter of the data corresponding to a respective filtering category;
sharing said data from said at least one category between services (126); and
removing said data depending on said removal criteria.

**8.** The method of claim 7, wherein receiving said data comprises obtaining said data from an application server.

**9.** The method of claim 7 or claim 8, wherein filtering said data to said at least one category comprises selecting said data required by said services.

**10.** The method of any of claims 7 to 9, wherein filtering said data to said at least one category comprises placing said data into a queue with configurable criteria for each category.

**11.** The method of any of claims 7 to 10, wherein filtering said data to said at least one category comprises processing said data based on at least one of usage, total count, known group, location and organization.

**12.** The method of any of claims 7 to 11, wherein associating said data with said removal criteria comprises configuring said data to expire based on at least one of last usage, group or organizational change and proximity change.

**13.** The method of any of claims 7 to 12, wherein associating said data with said removal criteria comprises configuring data to be removed if access to it is locked.

**14.** The method of any of claims 7 to 13, wherein removing said data depending on said removal criteria comprises configuring an expiration for said data or forcing removal of said data.

**15.** The method of any of claims 7 to 14, wherein removing said data depending on said removal criteria comprises determining whether a memory threshold has been reached.
